# EUROPEAN PATENT APPLICATION

(11) **EP 0 994 542 A1**
(43) Date of publication of application: **19.04.2000**
(21) Application number: 99308078.7
(22) Date of filing: 13.10.1999
(51) Int. Cl.: H01S 3/07, H01S 3/0941

(54) **Laser oscillator with slab-shaped solid-state laser media**

(30) Priority: 14.10.1998 JP 30642398
(71) Applicant: FANUC LTD, Minamitsuru-gun, Yamanashi 401-0597 (JP)
(72) Inventor: Karube, Norio, Machida-shi, Tokyo 194-0002 (JP); Iehisa, Nobuaki, Mishima-shi, Shizuoka 411-0026 (JP); Sato, Masao, Room 14-308, Fanuc Manshonharimomi, Minamitsuru-gun, Yamanashi 401-0511 (JP)
(74) Representative: Billington, Lawrence Emlyn

(57) **Abstract**

A slab-type solid laser oscillator device comprises a plurality of laser mediums 1a, 1b of slab shape arranged side by side in an optical resonator. Excitation light sources using laser diodes 2a, 2b are arranged on both sides of the plurality of laser mediums. Excitation light 5a, 5b is emitted from the laser diodes 2a, 2b into the plurality of laser mediums 1a, 1b.

## Description

The present invention relates to a slab-type solid-state laser oscillating device for use in a laser beam machining apparatus or the like, and particularly to the improvement of a slab-type solid-state laser oscillating device using laser diodes as an excitation light source.

In recent years, a solid-state laser oscillating device such as a YAG laser is used in a laser beam machining apparatus or the like which performs cutting, welding or the like of metallic or non-metallic material. As an excitation light source for exciting a laser medium, LD (laser diode) has come to be used, besides a conventionally used lamp.

Solid-state laser oscillating devices are broadly divided into slab-type solid-state laser oscillators and rod-type solid-state laser oscillators, according to the shape of a laser medium used therein. The slab-type solid-state laser oscillator is preferably used because LD's can be arranged on both sides of a laser medium of a slab shape, and a zigzag optical path can be formed in the laser medium.

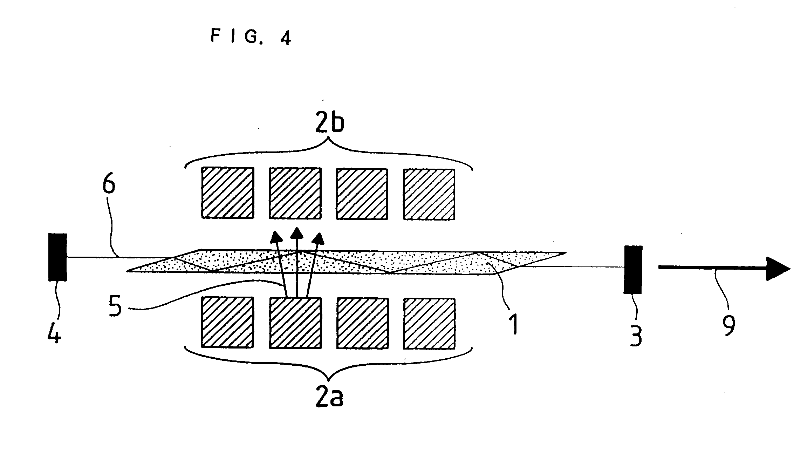

FIG. 4 shows a schematic structure of a previously-proposed slab-type solid-state laser oscillating device in which LD's are arranged on both sides of a laser medium. In FIG. 4, a laser medium (YAG laser crystal) 1 is arranged in an optical resonator constituted by an output mirror 3 of a partial reflection mirror, and a total reflection mirror 4. A required number of LD's as excitation light sources are arranged on both sides of the laser medium 1, in the form of stack 2a, 2b. Excitation light 5 emitted from the LD's excites (pumps) the laser medium 1, so that an output laser beam 9 is emitted from the output mirror 3.

In usual cases, both end faces of the laser medium 1 are cut obliquely at an angle substantially satisfying the Brewster condition and a zigzag optical path is formed in the laser medium 1. A zigzag optical path in the laser medium 1 is advantageous in view of avoiding deterioration in quality of a laser beam due to a refractive index gradient caused in the laser medium 1. Specifically, since the laser medium 1 is in touch with coolant (for example, cooling water, not shown) which circulates around the laser medium 1, the laser medium 1 has a temperature distribution such that temperature drops from the central axis toward the periphery thereof, and accordingly has a concentric profile of refractive index.

Thus, the straight optical path formed in the laser medium 1 makes a difference in the optical length thereof in dependence on the position in the radial direction where the laser beam 6 passes through the optical resonator, to cause an undesirable effect on optical resonance. On the contrary, in the case of the zigzag optical path, the optical length thereof is averaged so that a difference in the optical length less occurs.

Withe the arrangement shown in FIG. 4, the excitation light 5 is supplied abundantly from both sides of the laser medium 1 so as to output higher power. However, arranging the LD stacks 2a, 2b on both sides of the laser medium 1 to supply excitation light causes a problem.

A considerable part of excitation light 5 emitted from LD's of a LD stack 2a (2b) on one side of the laser medium 1 is not absorbed by the laser medium 1 but passes through the laser medium 1 and impinges on a LD stack 2b (2a) on the other side of the laser medium 1. Such mutual impingement of light from LD's on one side onto LD's on the other side has harmful effects on the LD's, such as shortening of the lifetime of the LD's and deteriorating of the light-emitting property. It is possible to use a laser medium 1 having a larger thickness and thereby reduce the amount of light mutually impinging on the LD's on both sides. However, a larger laser crystal generally causes a large increase in cost. Further, a larger laser crystal is more difficult to cool, so that the refractive index gradient due to the temperature gradient more easily occurs therein.

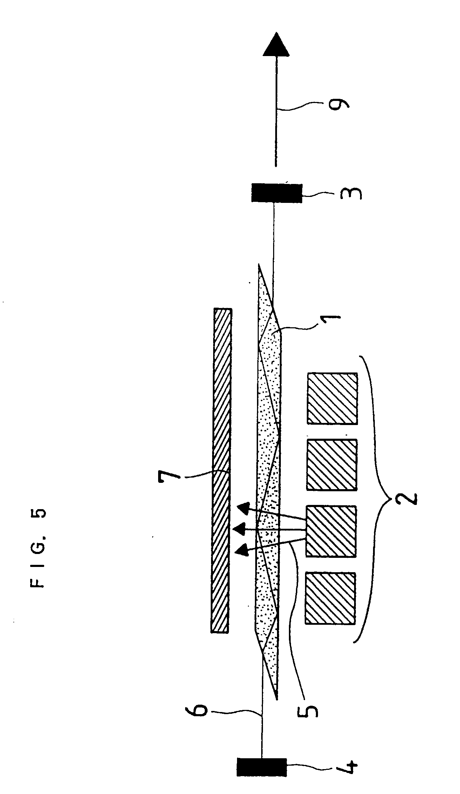

In order to avoid this problem, a slab-type solid-state laser oscillator as shown in FIG. 5 has been proposed. As shown in FIG. 5, a laser medium (YAG laser crystal) 1 is arranged in an optical resonator constituted by an output mirror 3, which is a partial reflection mirror, and a total reflection mirror 4. A required number of LD's are arranged on one side of the laser medium 1, forming a stack 2. Excitation light 5 emitted from the LD's excites the laser medium 1, so that an output laser beam 9 is emitted from the output mirror 3.

Like the laser oscillator shown in FIG. 4, both end faces of the laser medium 1 are cut obliquely at an angle substantially satisfying the Brewster condition and a zigzag optical path of a laser beam 6 is formed in the laser medium 1.

The structural feature of FIG. 5 resides in that the LD stack 2 of a required number of LD's for emitting excited light 5 is arranged only one side of the slab-shaped laser medium 1 and that a reflector 7 is arranged on the other side of the laser medium 1. In this structure, excitation light 5 emitted from the LD's of the LD stack 2 on one side of the laser medium 1 impinges on the laser medium 1 and absorbed by the laser medium 1 to be used for excitation. Part of the excitation light 5 is not absorbed by the laser medium 1 but passes through the laser medium 1, and then a large part of this light is reflected by the reflector 7 on the other side and impinges on the laser medium 1 again to be used for excitation.

Thus, in the slab-type solid-state laser oscillator shown in FIG. 5, the undesirable effects of the mutual impingement of light on LD's, such as shortening of lifetime and deterioration in the light emitting property, can be avoided by arranging the LD stack 2 only on one side of the laser medium 1. Further, reduction of supply of excitation light 5 is compensated by arranging the reflector 7 to face the LD stack 2 on the other side of the laser medium.

However, the supplemental amount of excitation light 5 which can be performed by the reflector 7 has a limitation and the supply of excitation light 5 is short compared with the arrangement of FIG. 4 (arrangement of LD's on both sides), so that higher power output is hindered.

An object of the present invention is to provide a slab-type solid-state laser oscillating device in which LD's for excitation are arranged on both sides of a laser medium to supply abundant excitation light so that high power output can be produced, while restraining undesirable effects of mutual impingement of light on the LD's such as shortening of lifetime and deterioration in the light emitting property of the LD's.

According to the present invention, a slab-type solid-state laser oscillating device comprises a plurality of slab-shaped laser mediums arranged side by side in an optical resonator, and excitation light sources using laser diodes arranged on both sides of the plurality of laser mediums. Since the excitation light emitted from LD's on one side passes across a plurality of laser mediums before impinging on LD's on the other side, the amount of light mutually impinging on the LD's is restrained, so that the undesirable effects such as shortening of lifetime and deterioration in the light emitting property of the LD's are restrained.

The plurality of laser mediums can be arranged either nonparallel or parallel with each other in accordance with a formation of the optical resonator. When the laser mediums are arranged nonparallel with each other, the arrangement may be such that a first laser medium of those laser mediums is disposed between an output mirror and a first total reflection mirror, and a second laser medium of those laser mediums is disposed between the output mirror and a second total reflection mirror. Alternatively, the arrangement may be such that a first laser medium of those laser mediums is disposed between first and second total reflection mirrors ,and a second laser medium of those laser mediums is disposed between an output mirror and the second total reflection mirror.

When the laser mediums are arranged parallel with each other, the arrangement may be such that a first laser medium of those laser mediums is disposed between first and second total reflection mirrors, and a second laser medium of those laser mediums is disposed between an output mirror and a third total reflection mirror.

As in ordinary slab-type solid-state laser oscillators, a zigzag optical path may be formed in each of the plurality of laser mediums in order to restrain an influence of a refractive index gradient in each laser medium.

### BRIEF DESCRIPTION OF THE DRAWINGS

FIG. 1 is a schematic diagram showing an arrangement of a slab-type solid-state laser oscillator according to a first embodiment of the present invention;
FIG. 2 is a schematic diagram showing an arrangement of a slab-type solid-state laser oscillator according to a second embodiment of the invention;
FIG. 3 is a schematic diagram showing an arrangement of a slab-type solid-state laser oscillator according to a third embodiment of the invention;
FIG. 4 is a schematic diagram showing an arrangement of a previously-proposed slab-type solid-state laser oscillator having LD's on both sides of a laser medium; and
FIG. 5 is a schematic diagram showing an arrangement of a previously-proposed slab-type solid-state laser oscillator having LD's on one side of a laser medium.

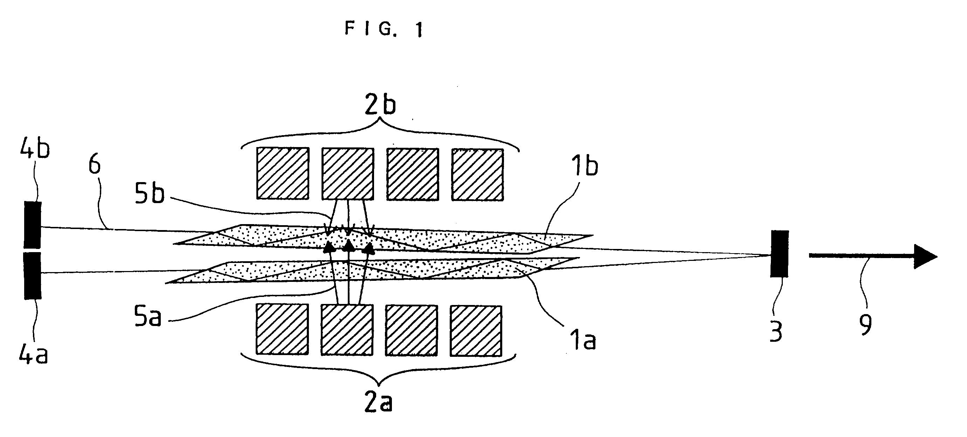

Three embodiments of the present invention will be described referring to FIGS. 1 to 3. In the drawings and description, elements common to the present invention and the previous examples shown in FIGS. 4 and 5 will be denoted appropriately by the common reference numerals.

FIG. 1 shows principal parts of a slab-type solid-state laser oscillator according to a first embodiment of the present invention. As shown in FIG. 1, two slab-shaped laser mediums (for example, YAG laser crystals) 1a, 1b having approximately the same length are arranged side by side in an optical resonator which is constituted by one output mirror (partial reflection mirror) 3 and two total reflection mirrors 4a, 4b. Specifically, the laser medium 1a is arranged between the output mirror 3 and the total reflection mirror 4a, and the other laser medium 1b is arranged between the output mirror 3 and the total reflection mirror 4b.

A required number of LD's which serve as an excitation light source are arranged on both sides of the laser mediums 1a, 1b which are arranged side by side, forming stacks 2a, 2b. Excitation light 5a emitted from the LD's of the LD stack 2a arranged on an outer side of the laser medium 1a first impinges on the laser medium 1a. A considerable part of the excitation light impinging on the laser medium 1a is used for exciting the laser medium 1a, while a part thereof passes across the laser medium 1a and impinges on the laser medium 1b. A considerable part of the excitation light impinging on the laser medium 1b is used for exciting the laser medium 1b, while the rest thereof passes across the laser medium 1b and a part thereof impinges on the LD's of the LD stack 2b.

Similarly, excitation light 5b emitted from the LD's of the LD stack 2b arranged on an outer side of the laser medium 1b impinges on the laser mediums 1b and 1a in order, and a considerable part thereof is used for exciting the laser mediums 1b and 1a. A part of the excitation light 5b which has passed across the laser medium 1b and 1a in order impinges on the LD's of the LD stack 2a.

A laser beam 6 produced in the laser medium 1a or 1b forms a reciprocating optical path of the laser medium 1a (or 1b) → the output mirror 3 → the laser medium 1b (or 1a) → the total reflection mirror 4b → the laser medium 1b (or 1a) → the output mirror 3 → the laser medium 1a (or 1b) → the total reflection mirror 4a → the laser medium 1a (or 1b). These reciprocating optical paths overlap each other and form a standing wave in the resonator. Part of the laser beam impinging on the output mirror 3 which is a partial reflection mirror is emitted as an output laser beam 9.

In order to secure the reciprocating optical path passing through both laser mediums 1a, 1b as described above, the laser mediums 1a, 1b are arranged not in parallel but at an angle with each other. The reflecting surfaces of the total reflection mirrors 4a, 4b are not parallel, either. Both end faces of each laser medium 1a, 1b are cut obliquely at an angle substantially satisfying the Brewster condition and a zigzag optical path is formed in each laser medium 1a, 1b. The advantage of forming a zigzag optical path in the laser mediums 1a, 1b is as described in relation to FIG. 4.

In this embodiment, since the excitation light 5a, 5b is supplied abundantly from both sides of the slab-shaped laser mediums 1a, 1b, the laser oscillator can produce higher power. Part of the excitation light 5a (5b) emitted from the LD's of the LD stack 2a (2b) arranged on one side of the laser mediums 1a, 1b impinges on the LD's of the LD stack 2b (2a) on the other side of the laser mediums 1a, 1b. However, such impingement is after the excitation light 5a (5b) has passed across the two laser mediums 1a, 1b. Therefore, the amount of light mutually impinging on the LD's on both sides is reduced as compared with that in the conventional laser oscillator shown in FIG. 4. Thus, the possibility of harmful effects such as shortening of lifetime and deterioration in the light emitting property of the LD's is made smaller.

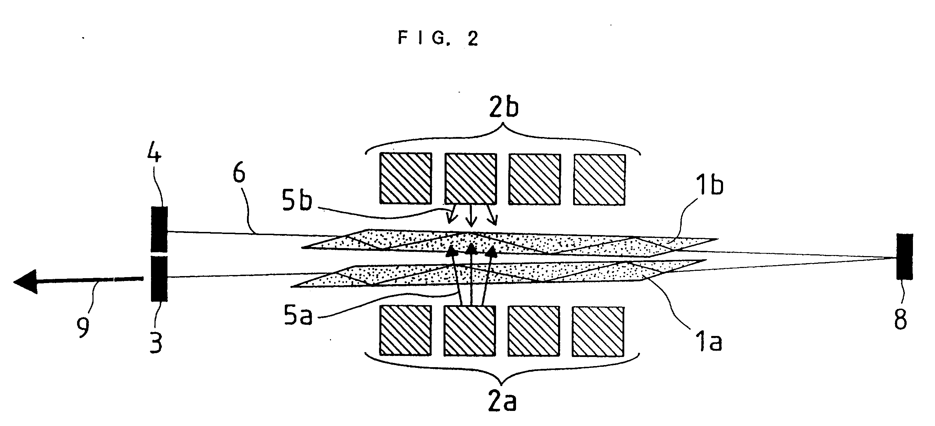

FIG. 2 shows principal parts of a slab-type solid-state laser oscillator according to a second embodiment of the present invention. In this embodiment, two slab-shaped laser mediums (for example, YAG laser crystals) 1a, 1b having approximately the same length are arranged side by side in an optical resonator which is constituted by one output mirror (partial reflection mirror) 3 and two total reflection mirrors 4, 8. Use of two total reflection mirrors is common to the first and second embodiments. The structure of a resonator of this embodiment differs from that of the first embodiment in that one total reflection mirror 4 of two total reflection mirrors is arranged beside the output mirror 3. Specifically, the laser medium 1a is disposed between the output mirror 3 and the total reflection mirror 8, and the other laser medium 1b is arranged between the total reflection mirror 4 and the total reflection mirror 8.

A required number of LD's which serve as an excitation light source are arranged on both sides of the laser mediums 1a, 1b which are arranged side by side, forming stacks 2a, 2b. The behavior of excitation light is the same as that in the first embodiment. Specifically, excitation light 5a emitted from the LD's of the LD stack 2a arranged on an outer side of the laser medium 1a impinges on the laser medium 1a and 1b in order, and a considerable part thereof is consumed for exciting the laser mediums 1a and 1b. A part of the excitation light 5a which has passed across the laser mediums 1a and 1b impinges on the LD's of the LD stack 2b on the other side.

Similarly, a considerable part of excitation light 5b emitted from the LD's of the LD stack 2b arranged on an outer side of the laser medium 1b is consumed for exciting the laser mediums 1b and 1a in order, and a part of the excitation light 5b which has passed across the laser mediums 1b and 1a impinges on the LD's of the LD stack 2a on the other side.

A laser beam 6 produced in the laser medium 1 a forms a reciprocating optical path of the laser medium 1a → the output mirror 3 → the laser medium 1a → the total reflection mirror 8 → the laser medium 1b → the total reflection mirror 4 → the laser medium 1b → the total reflection mirror 8 → the laser medium la. Similarly, a laser beam 6 produced in the laser medium 1b forms a reciprocating optical path of the laser medium 1b → the total reflection mirror 4 → the laser medium 1b → the total reflection mirror 8 → the laser medium 1a → the output mirror 3 → the laser medium 1a → the total reflection mirror 8 → the laser medium 1b. These reciprocating optical paths overlap each other and form a standing wave in the resonator. Part of the laser beam impinging on the output mirror 3, which is a partial reflection mirror, is emitted as an output laser beam 9.

In order to secure the reciprocating optical paths passing through both laser mediums 1a and 1b as described above, the laser mediums 1a and 1b are arranged not in parallel but at an angle with each other. The reflecting surfaces of the output mirror 3 and the total reflection mirror 4 are not parallel, either. Like the first embodiment, both end faces of each laser medium 1a, 1b are cut obliquely at an angle substantially satisfying the Brewster condition and a zigzag optical path is formed in each laser medium 1a, 1b. The advantage of forming a zigzag optical path in the laser mediums 1a, 1b is as described in relation to FIG. 4.

Also in this embodiment, since the excitation light 5a, 5b is supplied abundantly from both sides of the slab-shaped laser mediums 1a, 1b, the laser oscillator can produce higher power. Part of the excitation light 5a (5b) emitted from the LD's of the LD stack 2a (2b) arranged on one side of the laser mediums 1a and 1b impinges on the LD's of the LD stack 2b (2a) on the other side of the laser mediums 1a and 1b. However, such impingement is after the excitation light 5a (5b) has passed across the two laser mediums 1a and 1b. Therefore, the amount of light mutually impinging on the LD's on both sides is reduced as compared with that in the conventional laser oscillator shown in FIG. 4. Thus, the possibility of harmful effects such as shortening of lifetime and deterioration in the light emitting property of the LD's is made smaller.

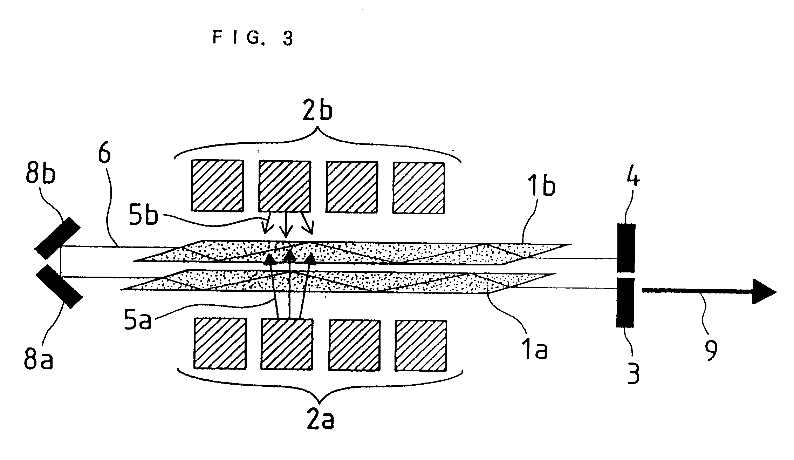

FIG. 3 shows principal parts of a slab-type solid-state laser oscillator according to a third embodiment of the present invention. In this embodiment, two slab-shaped laser mediums (for example, YAG laser crystals) 1a and 1b having approximately the same length are arranged side by side in an optical resonator which is constituted by one output mirror (partial reflection mirror) 3 and three total reflection mirrors 4, 8a and 8b. Of the three total reflection mirrors 4, 8a and 8b, the total reflection mirror 4 is arranged beside the output mirror 3. The other two total reflection mirrors 8a and 8b are arranged with their reflecting surfaces at an angle of 90° with each other (typically, each at an angle of 45° with the longitudinal axis of the associated laser medium 1a, 1b), so that an optical path may turn around in parallel as shown in FIG. 3. The laser medium 1a is disposed between the output mirror 3 and the total reflection mirror 8a, and the other laser medium 1b is disposed between the total reflection mirror 4 and the total reflection mirror 8b.

A required number of LD's which serve as an excitation light source are arranged on both sides of the laser mediums 1a and 1b which are arranged side by side, forming stacks 2a, 2b. The behavior of excitation light is the same as that in the first embodiment. Specifically, excitation light 5a emitted from the LD's of the LD stack 2a arranged on an outer side of the laser medium 1a impinges on the laser mediums 1a and 1b in order, and a considerable part thereof is consumed for exciting the laser mediums 1a and 1b. A part of the excitation light 5a which has passed across the laser mediums 1a and 1b impinges on the LD's of the LD stack 2b on the other side.

Similarly, a considerable part of excitation light 5b emitted from the LD's of the LD stack 2b arranged on an outer side of the laser medium 1b is consumed for exciting the laser mediums 1b and 1a in order, and a part of the excitation light 5b which has passed across the laser mediums 1b and 1a impinges on the LD's of the LD stack 2a on the other side.

A laser beam 6 produced in the laser medium 1a forms a reciprocating optical path: the laser medium 1a → the output mirror 3 → the laser medium 1a → the total reflection mirror 8a → the total reflection mirror 8b → the laser medium 1b → the total reflection mirror 4 → the laser medium 1b → the total reflection mirror 8b → the total reflection mirror 8a → the laser medium 1a. Similarly, a laser beam 6 produced in the laser medium 1b forms a reciprocating optical path: the laser medium 1b → the total reflection mirror 4 → the laser medium 1b → the total reflection mirror 8b → the total reflection mirror 8a → the laser medium 1a → the output mirror 3 → the laser medium 1a → the total reflection mirror 8a → the total reflection mirror 8b → the laser medium 1b. These reciprocating optical paths overlap each other and form a standing wave in the resonator. Part of the laser beam impinging on the output mirror 3, which is a partial reflection mirror, is emitted as an output laser beam 9.

In this embodiment, an optical path turning around in parallel is formed by using two total reflection mirrors 8a and 8b, so that the laser mediums 1a and 1b are arranged in parallel. The reflecting surfaces of the output mirror 3 and the total reflection mirror 4 are also parallel with each other. Like the first embodiment, both end faces of each laser medium 1a, 1b are cut obliquely at an angle substantially satisfying the Brewster condition and a zigzag optical path is formed in each laser medium 1a, 1b. The advantage of forming a zigzag optical path in the laser mediums 1a, 1b is as described in relation to FIG. 4.

Also in this embodiment, since the excitation light 5a, 5b is supplied abundantly from both sides of the slab-shaped laser mediums 1a and 1b, the laser oscillator can produce higher power. Part of the excitation light 5a (5b) emitted from the LD's of the LD stack 2a (2b) arranged on one side of the laser mediums 1a and 1b impinges on the LD's of the LD stack 2b (2a) on the other side of the laser mediums 1a and 1b. However, the impingement is after the excitation light 5a (5b) has passed across the two laser mediums 1a and 1b. Therefore, the amount of light mutually impinging on the LD's on both sides is reduced as compared with that in the conventional laser oscillator shown in FIG. 4. Thus, the possibility of harmful effects such as shortening of lifetime and deterioration in the light emitting property of the LD's is made smaller.

The embodiments in which two slab-shaped laser mediums are arranged side by side have been described, but three or more laser mediums can be arranged side by side in the optical resonator in the above embodiments by making modification such as arranging additional total reflection mirrors in the optical resonator.

Thus, the present invention provides a slab-type solid-state laser oscillator wherein LD's for excitation are arranged on both sides of a laser medium to supply abundant excitation light so that higher power output is produced, while undesirable effects of mutual impingement of light on the LD's such as shortening of lifetime and deterioration in the light emitting property of the LD's are restrained.

Embodiments of the invention as described and illustrated provide a slab-type solid-state laser oscillating device capable of producing high power output while restraining undesirable effects of mutual impingement of light on laser diodes (LD's) serving as excitation light sources. Laser mediums are arranged side by side and each laser medium is disposed between an output mirror and a total reflection mirror or between total reflection mirrors. LD stacks are arranged on both sides of the laser mediums. Excitation light emitted from an LD stack on one side impinges on the laser mediums in the order of 1a→1b/1b→1a and a considerable part thereof is consumed for exciting the laser mediums. Only a part of the rest of the excitation light (a relatively small amount of light) reaches LD's of an LD stack on the other side. Laser beams produced in the laser mediums overlap each other and form a standing wave in an optical resonator. An output laser beam is emitted from the output mirror. The end faces of each laser medium are cut obliquely to substantially satisfy the Brewster condition and a zigzag optical path is formed in each laser medium.

## Claims

1. A slab-type solid laser oscillating device comprising:
a plurality of laser mediums of slab shape arranged side by side in an optical resonator; and
excitation light sources using laser diode arranged on both sides of said plurality of laser mediums.

2. A slab-type solid laser oscillating device according to claim 1, wherein said plurality of laser mediums are arranged nonparallel to each other.

3. A slab-type solid laser oscillating device according to claim 1 or 2, wherein said optical resonator comprises one output mirror and a plurality of total reflection mirrors, a first laser medium of said plurality of laser mediums is disposed between the output mirror and a first total reflection mirror, and a second laser medium of said plurality of laser mediums is disposed between the output mirror and a second total reflection mirror.

4. A slab-type solid laser oscillating device according to claim 1 or 2, wherein said optical resonator comprises one output mirror and a plurality of total reflection mirrors, a first laser medium of said plurality of laser mediums is disposed between a first total reflection mirror and a second total reflection mirror, and a second laser medium of said plurality of laser mediums is disposed between the output mirror and the second total reflection mirror.

5. A slab-type solid laser oscillating device according to claim 1, wherein said plurality of laser mediums are arranged parallel to each other.

6. A slab-type solid laser oscillating device according to claim 5, wherein said optical resonator comprises one output mirror and a plurality of total reflection mirrors, a first laser medium of said plurality of laser mediums is disposed between a first total reflection mirror and a second total reflection mirror, and a second laser medium of said plurality of laser mediums is disposed between the output mirror and a third total reflection mirror.

7. A slab-type solid laser oscillating device according to any one of claims 1 to 6, wherein a zigzag optical path is formed in each of said plurality of laser mediums.
